Europäisches Patentamt

**European Patent Office**

Office européen des brevets

(11) Veröffentlichungsnummer: **0 049 496**
**B1**

(12) **EUROPÄISCHE PATENTSCHRIFT**

(45) Veröffentlichungstag der Patentschrift:
**23.01.85**

(21) Anmeldenummer: **81107858.3**

(22) Anmeldetag: **02.10.81**

(51) Int. Cl.⁴: **H 05 B 3/28, F 24 D 13/02**

(54) **Heizelement.**

(30) Priorität: **03.10.80 DE 3037530**

(43) Veröffentlichungstag der Anmeldung:
**14.04.82 Patentblatt 82/15**

(45) Bekanntmachung des Hinweises auf die Patenterteilung:
**23.01.85 Patentblatt 85/4**

(84) Benannte Vertragsstaaten:
**AT DE FR IT**

(56) Entgegenhaltungen:
**DE - A - 1 554 718**
**DE - A - 2 008 307**
**FR - A - 2 306 509**
**US - A - 2 138 217**

(73) Patentinhaber: **Buchtal GmbH Keramische Betriebe,**
**D-8472 Schwarzenfeld/Opf. (DE)**

(72) Erfinder: **Rohrhirsch, Josef, Fichtenstrasse 19,**
**D-8472 Schwarzenfeld/Opf.-Traunricht (DE)**

(74) Vertreter: **Betzler, Eduard, Dipl.-Phys. et al,**
**P.O.Box 700209 Plinganserstrasse 18a,**
**D-8000 München 70 (DE)**

**Beschreibung**

Die Erfindung bezieht sich auf ein Heizelement mit auf einer Seite eines plattenförmigen keramischen Trägers angebrachten, elektrischen, in einem Einbettungsmaterial eingebetteten Heizwendeln und richtet sich insbesondere auf ein Bodenflächenheizelement dieser Art.

Bei einer Art bekannter Heizelemente strahlt die Wärme unmittelbar von den Heizwendeln ab, die gegebenenfalls in oder an einem keramischen Träger angebracht sind, der als Isolierung gegen eine Aufstellfläche od. dgl. dient.

Aus der DE-OS 1 615 315 ist es auch bereits bekannt, die Heizwendeln durch eine keramische Platte abzudecken.

Man kennt auch bereits Heizelemente, bei denen die elektrischen Wendeln auf der von der Abstrahlseite abgewendeten Seite durch Spiegel oder Kollektoren abgedeckt sind, die gegebenenfalls mit einer Wärmedämmschicht hinterlegt sein können.

Ferner sind Heizvorrichtungen bekannt, bei denen innerhalb eines Verbundes aus vergleichsweise dickwandigen keramischen Elementen ein z. B. elektrische Energie führender Träger angeordnet ist, mit dessen Hilfe der Verbund aus keramischen Körpern aufgeheizt wird. Nach Aufheizung auf einen bestimmten Temperaturwert wird der Energie führende Träger abgeschaltet und das Strahlungselement strahlt nunmehr die gespeicherte Wärmemenge ab.

Aufgabe der Erfindung ist die Schaffung eines Heizelementes, das insbesondere als Bodenflächenheizelement brauchbar ist und das als architektonisches Bauelement vielseitig verwendbar ist und durch seine Ausgestaltung die Möglichkeit bietet, es, ohne daß es einen optisch störenden Faktor bildet, in eine gegebene Architektur einzugliedern und sogar durch seine eigene Ausgestaltung als schmückendes Element der Architektur zur Geltung zu bringen.

Diese Aufgabe wird erfindungsgemäß dadurch gelöst, daß der plattenförmige keramische Träger eine großflächige, dünne, keramische Platte mit einem Verhältnis der Kantenabmessung zur Plattenstärke von mindestens 50 : 1 und mit beidseitig glatter Oberfläche ist und das Einbettungsmaterial aus einem Körper aus phosphatgebundenem Magnesiumoxid besteht, der mit der keramischen Platte mittels eines anorganischen, wärmebeständigen Klebers verbunden ist.

Unter großflächiger keramischer dünner Platte soll dabei eine Platte von mindestens 30 × 60 cm, im allgemeinen aber weit darüber hinaus bis z. B. 120 × 160 cm verstanden werden, deren Stärke in der Größenordnung zwischen 10 und 20 mm liegt.

Durch die Verwendung einer dünnwandigen, einstückigen, großflächigen keramischen Platte läßt sich ein solches Heizelement ohne wesentliche Beeinträchtigung der tragenden Strukturen in Wand, Decken oder Bodenflächen eingliedern oder an diese angliedern. Außerdem ist es durch die Ausgestaltung der Platte hinsichtlich ihrer Glasur und sonstigen Oberflächengestaltung möglich, das Heizelement so auszugestalten, daß seine technische Funktion nach außen nicht in Erscheinung tritt, es vielmehr sogar eine schmückende Funktion übernehmen kann.

Das Heizelement nach der Erfindung läßt sich in einen Bodenbelag einbauen, in dem es bündig mit dem vorhandenen Bodenbelag auf dem jeweiligen Unterboden verlegt wird. Man ist also in der Lage, eine Bodenheizung aufzugliedern und beispielsweise nur dort zur Wirkung zu bringen, wo sie nicht durch aufgestellte Möbel od. dgl. an sich abgedeckt wäre. Zu diesem technischen Effekt kommt noch hinzu, daß sich interessante Bodenstrukturen durch entsprechende Ausgestaltung der Sichtseite der großformatigen, dünnwandigen keramischen Platte erstellen lassen.

Ein weiterer Vorteil des Heizelementes nach der Erfindung besteht darin, daß man in weiterer Ausbildung den Einbettungskörper ebenfalls mit einer Wärme abstrahlenden, dünnwandigen, keramischen Platte abdecken kann, man somit ein aufstellbares Heizelement erhält, das beidseitig Wärme abzugeben vermag. Mit einer solchen Konstruktion lassen sich beispielsweise Paravents und ähnliche Gebilde erstellen, die als schmückender Bestandteil der Raummöbelierung auch als Raumteiler wirksam werden können.

Ähnliches gilt für die Verwendung des erfindungsgemäßen Heizelementes als in oder an einer Wand oder Decke angebrachtes Flächenheizelement. In diesem Fall wird es auf dem Mauerwerk verlegt, das man gegenüber dem erfindungsgemäßen Heizelement gegebenenfalls noch isolieren kann. Bei dieser Verwendung des erfindungsgemäßen Heizelementes ist es nicht unbedingt erforderlich, die Sichtfläche der keramischen Platte bündig mit der Wand oder Decke abschließen zu lassen. Vielmehr kann man durch Vor- oder Zurücksetzen interessante architektonische Effekte erzielen. Die Zeichnung zeigt in

Fig. 1 ein erfindungsgemäßes Heizelement in einer Ausführungsform, die sich in der verschiedensten Weise einbauen und anwenden läßt; und in

Fig. 2 ein erfindungsgemäßes Heizelement als nach zwei Seiten abstrahlendes Element.

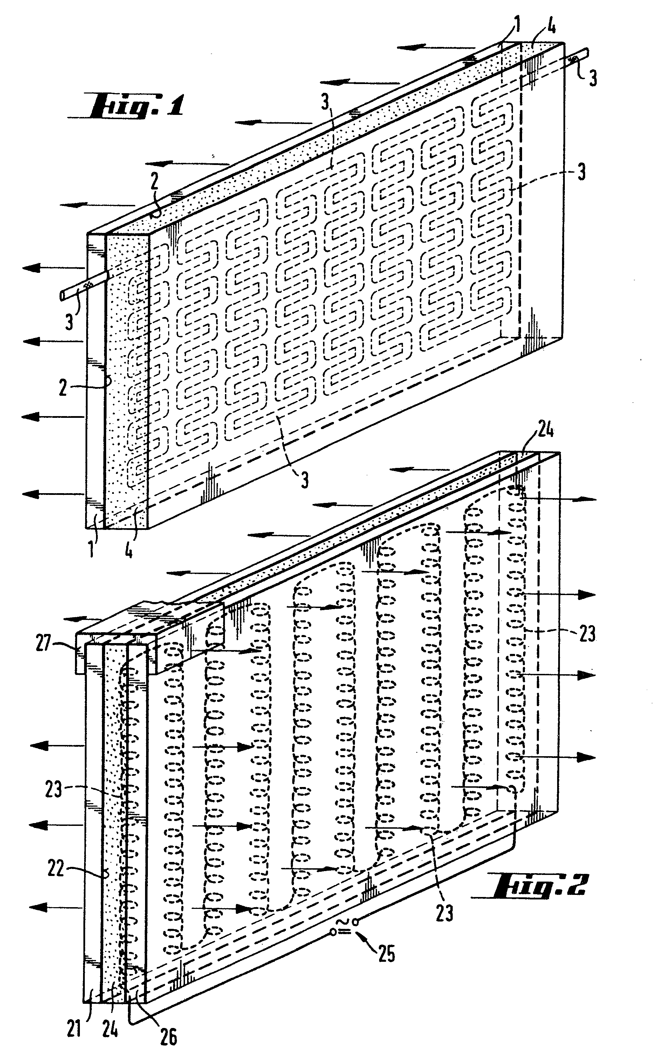

In Fig. 1 ist mit 1 eine dünnwandige, großformatige keramische Platte bezeichnet, auf deren der Sichtseite abgewendeten Rückseite 2 eine elektrische Heizwendel 3 verlegt ist. Die freie Seite der Heizwendel 3 ist mit einem Einbettungsmaterial 4 in geeigneter Weise abgedeckt. Bei dem Einbettungsmaterial handelt es sich vorzugsweise um einen Körper aus phosphatgebundenem Magnesiumoxid, der mittels eines anorganischen, wärmebeständigen Klebers mit der Rückseite der Platte verbunden ist. Bei dem Kleber kann es sich beispielsweise um einen Wasserglaskleber handeln.

Fig. 2 zeigt eine Ausführungsform, bei der die dünnwandige großformatige keramische Platte 21 auf ihrer Rückseite 22 ebenfalls Heizwendeln 23 trägt, die an eine Wechsel- oder Gleichstromquelle 25 angeschlossen und in einem Einbettungsmaterial 24 eingebettet sind. Die von der Strahlungsseite der keramischen Platte 21 abgewendete Seite der Heizwendel 23 ist durch eine dünnwandige großformatige keramische Platte 26 abgedeckt, so daß die in dem Einbettungsmaterial 24 eingebettete Heizwendel 23 zwischen zwei Platten 21 und 26 eingeschlossen ist. Man erhält auf diese Weise ein Heizelement, das die Wärme nach beiden Seiten abstrahlen kann.

Die Anordnung kann durch einen Winkelrahmen zusammengefaßt sein, wie er beispielsweise bei 27 teilweise angedeutet ist. Eine solche Anordnung eignet sich z. B. sehr gut als ein frei im Raum aufstellbarer Paravent, als Duschbekenumkleidung oder ähnliches.

In beiden Figuren sind die Wandstärken der Platten 1, 23 bzw. 26 und des Einbettungsmaterials 4 bzw. 24 gegenüber den Längen- und Breitenabmessungen des Heizelementes aus Gründen der einfacheren Darstellung stark vergrößert dargestellt.

## Patentansprüche

1. Heizelement, insbesondere Bodenflächenheizelement, mit auf einer Seite eines plattenförmigen keramischen Trägers angebrachten, elektrischen, in einem Einbettungsmaterial eingebetteten Heizwendeln, dadurch gekennzeichnet, daß der plattenförmige keramische Träger eine großflächige, dünne, keramische Platte mit einem Verhältnis der Kantenabmessung zur Plattenstärke von mindestens 50 : 1 und beidseitig glatter Oberfläche ist und das Einbettungsmaterial aus einem Körper aus phosphatgebundenem Magnesiumoxid besteht, der mit der keramischen Platte mittels eines anorganischen, wärmebeständigen Klebers verbunden ist.

2. Heizelement nach Anspruch 1, dadurch gekennzeichnet, daß die keramische Platte auf ihrer Sichtfläche eine Glasur aufweist.

3. Heizelement nach Anspruch 1 oder 2, dadurch gekennzeichnet, daß das Einbettungsmaterial auf der von der keramischen Platte abgewendeten Seite durch eine dieser Platte entsprechende keramische Platte abgedeckt ist.

## Claims

1. A heating element, in particular a floor surface heating element, comprising electrical heating spirals embedded in an embedding material and provided on one side of a tile-shaped ceramic carrier, characterized in that the tile-shaped ceramic carrier is a largesurface, thin, ceramic tile, the ratio of the edge dimension to the tile thickness being at least 50 : 1, and both sides of the tile having a smooth surface, and the embedding material consisting of a body of phosphate-bound magnesium oxide and being connected with the ceramic tile by means of an inorganic, heat-resistant adhesive.

2. A heating element as in claim 1, characterized in that the ceramic tile has a glaze on its visible surface.

3. A heating element as in claim 1 or 2, characterized in that the embedding material is covered on the side facing away from the ceramic tile by a ceramic tile corresponding to this tile.

## Revendications

1. Elément de chauffage, en particulier un élément de chauffage du fond avec des spirales chauffantes électriques inclues dans un milieu d'inclusion et fixées à l'une côté d'une poutre céramique en forme de plaque, caractérisé en ce que la poutre céramique en forme de plaque est une plaque céramique mince, de grande surface et lisse des deux côtés, dont la relation de la dimension des arêtes à son épaisseur doit s'élever au moins à 50 : 1, et que le matériau d'inclusion est constitué d'un corps d'oxyde de magnésium lié en phosphate, relié à la plaque céramique au moyen d'une colle inorganique thermostable.

2. Elément de chauffage selon la revendication 1, caractérisé en ce que la plaque céramique présente une glaçure sur sa face visible.

3. Elément de chauffage selon les revendications 1 ou 2, caractérisé en ce que le matériau d'inclusion est couvert, à son côté détourné de la plaque céramique, d'une plaque céramique correspondant à celle-ci.

**Fig.1**

**Fig.2**